Europäisches Patentamt

European Patent Office

Office européen des brevets

(19)

(11) Numéro de publication: **0 245 174 B1**

(12) **FASCICULE DE BREVET EUROPEEN**

(45) Date de publication de fascicule du brevet:
14.08.91

(51) Int. Cl.5: **B21B 1/38**, B23K 25/00

(21) Numéro de dépôt: 87401024.2

(22) Date de dépôt: 05.05.87

(54) **Procédé de fabrication d'une bande de tôle composite polymétallique, notamment d'une bande de tôle composite mince à base d'acier et articles obtenus à partir d'une telle tôle.**

(30) Priorité: 05.05.86 FR 8606473

(43) Date de publication de la demande:
11.11.87 Bulletin 87/46

(45) Mention de la délivrance du brevet:
14.08.91 Bulletin 91/33

(84) Etats contractants désignés:
AT BE CH DE ES FR GB GR IT LI LU NL SE

(56) Documents cités:
DE-A- 2 238 321
DE-B- 1 101 653
US-A- 3 475 811

PATENT ABSTRACTS OF JAPAN, vol. 9, no.
278 (C-312)[2001], 6 novembre 1985; & JP-
A-60 125 336 (SHIN NIPPON SEITETSU K.K.)
04-07-1985

W. SCHWENZFEIER: "Walzwerktechnik",
1979, pages 95-100,185-192, Springer Verlag,
Wien/New York

(73) Titulaire: **USINOR CHATILLON**
**La Défense 9 4, Place de la Pyramide**
**F-92800 PUTEAUX(FR)**

(72) Inventeur: **Grosbety, Yves**
**44 Résidence les Cytises**
**62190 Lilliers(FR)**
Inventeur: **Bavay, Jean-Claude**
**36, rue Arthur Lamendin**
**62330 Isbergues(FR)**
Inventeur: **Bourgain, Pierre**
**20, rue Lydéric**
**62120 Aires-sur-La-Lys(FR)**

(74) Mandataire: **Bressand, Georges et al**
**c/o CABINET LAVOIX 2 Place d'Estienne**
**d'Orves**
**F-75441 Paris Cédex 09(FR)**

EP 0 245 174 B1

PATENT ABSTRACTS OF JAPAN, vol. 8, no. 87 (M-291)[1524], 20 avril 1984; & JP-A-59 4903 (KAWASAKI SEITETSU K.K.) 11-01-1984

METAL ABSTRACTS, vol. 17, novembre 1984, page 188, résumé no. 62-0386, Columbus, Ohio, US; "Kawasaki steel develops an existing technology for producing stainless clad plate", & STEEL TIMES INT., JUNE 1984, 8, (2), 71-72

PATENT ABSTRACTS OF JAPAN, vol. 10, no. 109 (M-472)[2166], 23 avril 1986; & JP-A-60 240 386 (MITSUBISHI JUKOGYO K.K.) 29-11-1985

PATENT ABSTRACTS OF JAPAN, vol. 7, no. 141 (M-223)[1286], 21 juin 1983; & JP-A-58 55 187 (SHIN NIPPON SEITETSU K.K.) 01-04-1983

EP 0 245 174 B1

## Description

La présente invention est relative aux bandes de tôles composites polymétalliques multicouches et plus particulièrement à la fabrication d'une telle bande de tôle composite polymétallique mince, à base d'acier.

Il est particulièrement intéressant pour de nombreuses applications de disposer d'une tôle, notamment d'acier, présentant des propriétés différentes dans l'âme et dans ses couches superficielles. En effet, l'âme d'une pièce en acier, telle qu'une tôle mince emboutie, doit conférer à la pièce la résistance mécanique, l'aptitude à l'emboutissage ou la conductibilité thermique alors que les couches superficielles en contact avec le milieu extérieur doivent résister à l'agressivité de ce milieu ou à son caractère abrasif, ne pas en altérer les propriétés (cas des aliments) et posséder un aspect esthétique, entre autres.

On a déjà proposé diverses solutions à ces contraintes parfois antinomiques entre le métal de coeur et le métal de peau, qui consistent en des produits tels qu'une tôle polymétallique stratifiée, c'est-à-dire une tôle composite formée d'au moins deux couches dont la nature ou la composition des métaux constitutifs de chaque couche est différente.

Pour fabriquer ces tôles polymétalliques stratifiées on a recours à différents procédés connus tels que le colaminage à chaud et à froid, le placage par explosion, le rechargement ou la formation d'un matériau sandwich par coulée en lingotière.

Le colaminage est le procédé le plus courant. Le colaminage à chaud consiste à superposer deux tôles ou plus par mise en contact de leurs grandes faces, à souder leurs bords et à laminer à chaud le stratifié ainsi obtenu afin d'obtenir une liaison métallurgique des diverses couches.

Parmi les inconvénients de ce procédé, citons la médiocre cohésion des couches stratifiées et sa restriction à la fabrication de tôles fortes plaquées.

Le colaminage à froid concerne des produits minces et la liaison n'est pas aussi intime que celle obtenue par le procédé faisant l'objet de la présente invention.

Le procédé de placage par explosion consiste à réaliser la liaison métallurgique entre deux tôles superposées grâce à l'impact à grande vitesse de ces dernières sous l'effet de la pression générée par une matière explosive disposée au-dessus de la surface libre d'une des tôles.

Les inconvénients de ce procédé tiennent aux contraintes de mise en oeuvre (sur un site non habité) ainsi qu'à l'impossibilité de plaquer un métal d'apport relativement fragile.

La procédé par rechargement consiste à apporter par soudage une couche d'un métal de peau sur une tôle ou une structure ayant déjà subi les étapes de transformation (métal de base constituant l'âme).

Les inconvénients de ce procédé tiennent à la diffusion des éléments d'une des couches dans l'autre, ce qui impose une épaisseur importante de métal d'apport en plusieurs passes. Ce procédé est déconseillé pour les tôles minces qui ont tendance à se déformer sous l'effet thermique lors du soudage.

En particulier, le procédé de rechargement par refusion sous laitier électroconducteur ne convient pas dans le cas de la fabrication de tôles minces et n'a été utilisé jusqu'ici que pour la fabrication de produits épais tels que des brames, lingots ou tôles ultrafortes. De tels produits de forte épaisseur peuvent éventuellement subir ensuite un laminage à chaud sur un slabbing ou un quarto pour être transformés en tôles fortes composites dont la longueur est au plus égale à 10 m et l'épaisseur supérieure à 6 mm.

Les procédés consistant à former un matériau sandwich par coulée en lingotière d'un métal d'apport autour d'une plaque comportent tous les inconvénients inhérents à la diffusion des éléments constitutifs d'un des métaux, en particulier le carbone, dans l'autre. D'autre part, l'épaisseur finale de la couche superficielle n'est pas constante.

On Connaît dans le JP-A 60-125336 un procédé de fabrication d'une bande de tôle composite polymétallique comportant au moins deux couches métalliques de compositions différentes, dont une couche constitue le métal de base et au moins une autre couche, un revêtement, dans lequel on élabore une brame composite par rechargement d'une brame ayant la composition du métal de base, sur au moins une de ses grandes faces, à l'aide d'un dépôt d'un métal d'apport ayant la composition du revêtement, par refusion sous laitier électrique, et dans lequel on soumet la brame composite à un processus de laminage sur un laminoir à bande, la brame étant initialement à une température de laminage à chaud, et le processus de laminage étant poursuivi jusqu'à l'obtention d'une bande de tôle ayant l'épaisseur désirée.

On connaît également dans le livre "WALZWERKTECHNIK" 1979, pages 95-100, 185-192, un procédé de fabrication d'une bande de tôle dans lequel on élabore une brame composite ayant une épaisseur comprise entre 120 et 300 mm par rechargement d'une brame en acier, on porte cette brame composite à une température de laminage à chaud comprise entre 1150° et 1350°C, on effectue un laminage à chaud de la brame composite sur un laminoir continu comprenant plusieurs cages dégrossisseuses et plusieurs cages finisseuses ou sur un train de laminoir semi-continu comprenant un laminoir réversible dégrossisseur et un laminoir finisseur, et on effectue, à la suite du laminage à chaud, un laminage à froid de la bande de

3

tôle.

La plupart de ces méthodes présentent des inconvénients à des titres divers et en particulier celui de ne pouvoir fabriquer les produits composites sur des lignes de laminage classiques continues ou discontinues comportant un laminage, à chaud puis à froid, sans encourir un risque important de décohésion.

La présente invention a pour but de remédier à ces inconvénients en fournissant un procédé industriel de fabrication d'une tôle mince polymétallique de grande valeur d'usage, présentant notamment des propriétés remarquables d'emboutissabilité, de résistance à la corrosion et de conductibilité thermique.

L'invention a ainsi pour objet un procédé de fabrication d'une bande de tôle composite polymétallique dont l'épaisseur est inférieure à 6 mm et la longueur au moins égale a 10 m comportant au moins deux couches métalliques de compositions différentes, dont une couche constitue le métal de base et au moins une autre couche, un revêtement, procédé selon lequel :
- on élabore une brame composite par rechargement d'une brame ayant la composition du métal de base, sur au moins une de ses grandes faces, à l'aide d'un dépôt d'un métal d'apport ayant la composition du revêtement, par refusion sous laitier électroconducteur,
- on soumet la brame composite à un processus de laminage sur un laminoir à bande, la brame étant initialement à une température de laminage à chaud et le processus de laminage étant poursuivi jusqu'à l'obtention d'une bande de tôle ayant l'épaisseur désirée, et
- on effectue, à la suite du laminage à chaud, un laminage à froid de la bande de tôle composite, caractérisé en ce qu'on dépose sur la brame, avant son rechargement par le métal d'apport, une couche formant barrière au phénomène de diffusion des éléments de l'une quelconque des couches du métal de base et du métal d'apport, dans l'autre.

Le procédé de fabrication de tôles composites polymétalliques selon l'invention utilise de préférence comme produit de départ une brame de coulée continue ayant la composition du métal de base, mais peut être appliqué à un lingot méplat ou à un bloom pour produits longs.

Le métal de base constitutif de la brame de départ peut être notamment en acier au carbone, en acier faiblement allié, en acier inoxydable ou en alliage de nickel dont la composition chimique est fonction de l'utilisation du produit composite désirée.

Le métal d'apport déposé par rechargement sur la brame peut être notamment un acier inoxydable martensitique, austénitique, ferritique ou austéno-ferritique ou tout autre alliage inoxydable ou réfractaire tel qu'un alliage à base de nickel par exemple.

Le métal d'apport déposé par rechargement peut être également un alliage résistant à l'abrasion tel qu'un acier à haute teneur en carbone ou un alliage à haute teneur en manganèse et en carbone.

Le dépôt du métal d'apport sur la brame est effectué sur une ou sur les deux faces principales de la brame et la nature du métal d'apport peut être différente sur chacune des faces rechargées.

Une des caractéristiques essentielles de l'invention réside dans le dépôt d'une couche barrière à la diffusion entre le métal de base et le métal d'apport qui sera décrite ci-après en référence au processus général de fabrication de la tôle composite.

Selon un mode de réalisation de l'invention, l'interposition de la couche formant barrière entre le métal de base et le métal d'apport peut être évitée si on utilise comme métal de base un acier ayant une teneur en carbone inférieure à 0,050 % en poids.

## Description détaillée du processus général de fabrication de la tôle composite

### Préparation de la brame

La brame de coulée continue en métal de base, par exemple en acier au carbone, subit une opération préalable de préparation de surface généralement effectuée par meulage. La surface ainsi meulée doit être exempte de dépôts ou incrustations d'oxydes, de défauts de solidification du type criques, retassures, etc..., et de défauts géométriques.

### Dépôt d'une couche barrière à la diffusion (si nécessaire(

Après meulage la brame est recouverte sur chaque face d'une couche de métal destinée à former écran aux phénomènes de diffusion.

L'utilisation d'une couche barrière à la diffusion est en particulier nécessaire lorsqu'on utilise une brame en acier au carbone destinée à être rechargée par un métal d'apport tel qu'un acier inoxydable, mais peut être inutile si les compositions chimiques du substrat et du dépôt sont compatibles.

Le composition de cette couche métallique barrière est définie et adaptée en fonction de la composition du métal de base et du métal d'apport et est choisie parmi des métaux tels que nickel pur, alliages de nickel, aciers inoxydables, fer de haute pureté dont la teneur en carbone est inférieure à 0,050 % en poids.

A titre d'illustration pour une brame dont le métal de base est un acier au carbone, on dépose une couche barrière en fer de haute pureté avant le rechargement par un acier inoxydable constituant le métal d'apport. L'épaisseur de la couche barrière est à ajuster suivant le mode opératoire ultérieur de laminage à chaud et à froid et peut aller de 0,1 à 10 mm.

La couche métallique barrière destinée à éviter les diffusions est déposée par un procédé de refusion sous flux ou sous laitier électro-conducteur à partir d'un feuillard d'épaisseur allant de 0,1 à 5 mm et de largeur allant de 15 à 1250 mm. Le flux utilisé est de type aggloméré, de granulométrie contrôlée. Les paramètres électriques du dépôt par refusion de la couche sont, à titre illustratif, respectivement de 800 à 3000 Ampères pour l'intensité et de 12 à 50 Volts pour la tension.

Rechargement par le métal d'apport

La brame recouverte de la barrière de diffusion est rechargée sur au moins une face à l'aide du métal d'apport dont la composition et l'épaisseur dépendent des conditions d'emploi du produit fini.

L'épaisseur de la couche de métal d'apport est définie par les besoins de l'utilisateur. Elle peut varier pour chaque face de 1 à 30 % de l'épaisseur du métal de base.

L'épaisseur totale de la brame composite obtenue est avantageusement comprise entre 120 et 300 mm.

Les dimensions totales de tôles composites ne présentent aucune limite technologique propre au procédé. L'invention permet de réaliser toutes les épaisseurs désirées et sans exclusive (ce qui en fait l'originalité) depuis les produits dits "extra-minces" (épaisseur < 0,5 mm) jusqu'aux tôles de 6 mm d'épaisseur.

Les dimensions en largeur et longueur sont limitées par celles des installations industrielles de laminage et peuvent à l'avenir évoluer dans les mêmes proportions que lesdites installations.

Les couches de rechargement sont déposées par refusion sous laitier électro-conducteur (procédé dénommé refusion ESR). Cette technique possède le double avantage :

- de conférer au métal d'apport une propreté inclusionnaire très nettement supérieure aux autres procédés qui ne mettent pas en oeuvre une refusion ESR. Cette propriété permet d'améliorer les propriétés d'emboutissabilité, de résistance à la corrosion et autorise la mise en forme par fluotournage.
- de limiter la dilution du métal d'apport par le métal de base, donc de mieux contrôler et maîtriser la composition chimique du métal d'apport. Les paramètres électriques donnés à titre indicatif de la refusion ESR sont les suivants :
    intensité : 800 à 2.500 Ampères
    tension : 10 à 50 Volts.

Suivant l'épaisseur de la couche de rechargement désirée, le dépôt pourra éventuellement être effectué en une ou plusieurs passes.

Le feuillard de rechargement possède les mêmes caractéristiques dimensionnelles que le feuillard utilisé pour la réalisation de la couche barrière de diffusion.

La brame composite obtenue par rechargement est ensuite laminée à chaud, puis éventuellement à froid pour être transformée en une bande de tôle composite de faible épaisseur. Le laminage est effectué sur un train de laminoir à bande continu ou semi-continu après un léger écroûtage de la brame par meulage.

Meulage (si nécessaire)

Afin de garantir un aspect de surface final parfaitement apte au polissage spéculaire, la brame rechargée subit avant laminage à chaud un léger écroûtage destiné à éliminer totalement les traces de laitier qui pourraient rester et s'y incruster lors de l'écrasement à chaud.

Cette opération est réalisée par meulage mécanique sur une machine de forte puissance (150 à 250 KW). La meule, à base de corindon fritté, tourne à grande vitesse (80 m/s) pour une élimination rapide des couches superficielles. Un second passage à faible pression peut être ensuite pratiqué afin d'obtenir une rugosité fine et régulière.

Conditions de lamiagne à chaud

La brame composite est réchauffée jusqu'à la température du laminage à chaud comprise entre 1150 et 1350°C dans le cas où le métal de base est un acier. La durée totale du cycle thermique (montée en température et maintien isotherme) est comprise entre 2 et 5 heures.

L'épaisseur de la brame composite est comprise entre 120 et 300 mm.

Le laminage à chaud peut être réalisé sur un train continu comprenant plusieurs cages dégrossisseuses (5 à 8) et finisseuses 5 à 8). A la sortie des cages dégrossisseuses, la température est comprise entre 1180 et 1000°C et l'épaisseur de la bande composite est comprise entre 20 et 45 mm.

A la sortie des cages finisseuses, la température est comprise entre 1080°C et 800°C et l'épaisseur de la bande composite est comprise entre 6 et 1,2 mm.

Le laminage à chaud peut être aussi réalisé sur un train semi-continu. Dans ce dernier cas, la brame rechargée est amenée jusqu'à l'épaisseur dite ébauche (20-45 mm) par un laminoir réversible, en 5 à 9 passes toutes les autres conditions étant égales par ailleurs à celles précédemment décrites.

Dans les deux cas, la bande composite après son passage dans les cages finisseuses est bobinée à l'épaisseur de 1,2 à 6 mm. La bande de tôle présente généralement à ce stade une longueur de plusieurs centaines de mètres. Ce bobinage peut être précédé d'un arrosage intensif à l'eau des deux faces, et éventuellement suivi d'une immersion de la bobine de tôle composite dans une piscine d'eau froide.

Recuit décapage

La bobine de tôle composite brute de laminage à chaud est introduite sur une ligne de recuit décapage continu. L'assemblage avec les autres bobines (composites ou non) de la séquence est assuré par soudage bout à bout dans une zone d'entrée. La bande composite passe ensuite dans un four de recuit où elle atteint une température compatible avec les métaux constitutifs (800 à 1150°C). La bande composite recuite est refroidie, puis grenaillée et décapée par passage dans différents bacs chimiques et/ou électrolytiques. La vitesse de la ligne est définie en fonction à la fois des conditions de recuit et de celles du décapage. Il est en effet utile de rappeler ici que la dissolution des calamines superficielles peut être très variable suivant la nature des alliages déposés à la surface. A ce stade, la tôle composite peut être utilisée en l'état (fini n° 1).

Selon une autre version, la bobine de tôle composite brute de laminage à chaud peut subir un recuit en vase clos avant l'opération de décapage.

Laminage à froid

Après recuit décapage, la bande composite débarrassée de sa calamine est laminée à froid sur un laminoir réversible permettant d'obtenir à la fois une régularité de l'épaisseur et un état de surface proche du poli miroir, en faisant varier le nombre de passes et la qualité de surface des cylindres de travail.

Compte tenu de l'épaisseur finale demandée et de la nature de la couche d'alliage déposée en surface, il peut être envisagé un point ou plusieurs points d'arrêt à une épaisseur intermédiaire. Dans ce cas, la bande composite est recuite en continu et décapée sur une ligne du même type que celle décrite précédemment. Cette opération de recuit est éventuellement suivie d'une réparation de surface à la bande abrasive sur une ligne spéciale conçue à cet effet. Finalement, la tôle composite est relaminée par un nouveau passage au laminoir à froid.

Recuit final

La tôle composite amenée à l'épaisseur finale, est fortement écrouie, ce qui nécessite un recuit final. Ce dernier peut être réalisé soit à l'air et suivi d'un décapage, soit en atmosphère protectrice (recuit brillant) qui ne nécessite pas de décapage ultérieur. Dans tous les cas, la température de recuit est fonction des métaux en présence dans le composite. La vitesse de passage est fonction soit des conditions du décapage (recuit décapage), soit des conditions thermiques du four (recuit brillant).

Skin-pass (si nécessaire)

Après l'opération de recuit final, la tôle composite peut être traitée sur un laminoir de type Skin-pass. Le but de ce traitement final est d'améliorer la planéité de la bande composite tout en glaçant sa surface. De plus, le très faible allongement obtenu est suffisant pour effacer le palier de limite élastique typique des aciers extra-doux, dont la présence conduirait au phénomène de vermiculure lors de l'emboutissage du produit.

Arrivée à ce stade, la tôle composite est prête pour les opérations de parachèvement (refendage, cisaillage, coupe à longueur) préliminaires à l'expédition.

A titre d'exemple, on décrira ci-après la fabrication d'une tôle mince composite dont l'âme est en acier doux et les deux faces rechargées par un acier inoxydable.

Un feuillard de largeur 60 mm et d'épaisseur 0,5 mm en fer de grande pureté ayant la composition chimique suivante :

| C | Si | S | P | Mn | Cr | Ni | Mo |
|---|----|---|---|----|----|----|----|
| 0,004 | 0,007 | 0,024 | 0,004 | 0,266 | 0,015 | 0,018 | 0,002 |

| Ti | Cu | Co | V | N | Al | Fe |
|----|----|----|---|---|----|----|
| 0,002 | 0,020 | 0,010 | 0,003 | 0,0043 | 0,034 | 99,347 |

a été utilisé pour réaliser sur chaque face, en plusieurs passes, une couche barrière d'épaisseur 5 mm sur une brame de coulée continue, de dimensions 200 x 1200 x 5000 mm en acier au carbone de composition.

| C | Si | S | P | Mn | Fe | (% pondéraux) |
|---|----|---|---|----|----|---------------|
| 0,153 | 0,24 | 0,001 | 0,019 | 1,27 | Balance | |

Sur la couche barrière, préalablement déposée par un procédé de refusion sous flux, on dépose un métal d'apport à l'aide d'un procédé ESR en utilisant un feuillard de largeur 60 mm et d'épaisseur 0,5 mm, d'acier inoxydable type AISI 304 L, de composition :

| C | Si | S | P | Mn | Cr | Ni | Mo |
|---|----|---|---|----|----|----|----|
| 0,022 | 0,515 | 0,005 | 0,023 | 1,66 | 18,14 | 9,07 | 0,128 |

| Al | Cu | Co | Fe | V | N |
|----|----|----|----|---|---|
| 0,007 | 0,087 | 0,181 | 70,096 | 0,059 | 0,040 |

(% pondéraux)

pour réaliser une couche de rechargement de 25 mm sur chaque face de la brame.

La brame ainsi rechargée a été laminée à chaud à 1200°C, décapée, transformée à froid, en deux étapes, avec recuit continu intermédiaire et final à 1050°C, jusqu'à l'épaisseur 0,8 mm.

L'aspect de surface des produits obtenus est excellente et la bonne adhérence du métal d'apport sur le métal de base, permet d'obtenir des emboutis profonds sans décohésion. L'emploi de cette tôle composite se traduit par un gain considérable de la conductibilité thermique par rapport à une tôle massive en acier inoxydable 304 L.

Le procédé suivant l'invention permet également de réaliser d'autres types de tôles composites et par exemple une tôle composite dont le métal de base constituant l'âme centrale est en acier au carbone, cette âme centrale étant recouverte sur ses deux faces par un revêtement en un alliage résistant à l'abrasion, avec interposition d'une couche barrière en acier inoxydable.

Le procédé suivant l'invention peut également être utilisé avantageusement pour fabriquer une tôle dont l'âme centrale est constituée par un acier inoxydable ferritique bon conducteur et recouverte sur ses deux faces par un revêtement d'acier inoxydable austénitique.

D'une manière générale, le matériau composite mis au point selon le procédé faisant l'objet de l'invention présente une couche extérieure d'une grande propreté inclusionnaire et d'une bonne adhérence.

Par ailleurs, selon les compositions chimiques du substrat et du métal d'apport, le matériau composite peut présenter une ou plusieurs des caractéristiques suivantes :
- bonne résistance à la corrosion par les solutions
- bonne tenue à l'oxydation à chaud
- bonne conductibilité thermique
- bonne emboutissabilité
- aptitude au fluotournage
- bonnes propriétés magnétiques
- faible coefficient de dilatation.

Les utilisations de la tôle selon l'invention sont nombreuses et variées grâce aux qualités particulières apportées par le mode d'obtention du matériau composite.

Les échangeurs de chaleur pour les industries chimiques, et pétro-chimiques, les diffuseurs et articles culinaires et les silencieux d'échappement peuvent être cités à titre d'exemples.

En particulier, la tôle composite polymétallique selon l'invention est particulièrement appropriée pour la fabrication de récipients de cuisson dont seules les couches superficielles sont en acier inoxydable et sur une très faible épaisseur de l'ordre du dixième de mm. On obtient ainsi un article ayant une bonne résistance à la corrosion et une excellente conductibilité thermique qui permet de se dispenser des fonds rapportés diffuseurs de la chaleur.

En outre, l'âme de la tôle mince composite en acier au carbone permet une mise en forme aisée par emboutissage au fluotournage.

## Revendications

1. Procédé de fabrication d'une bande de tôle composite polymétallique dont l'épaisseur est inférieure à 6 mm et la longueur au moins égale à 10 m comportant au moins deux couches métalliques de compositions différentes, dont une couche constitue le métal de base et au moins une autre couche, un revêtement, procédé selon lequel :
    - on élabore une brame composite par rechargement d'une brame ayant la composition du métal de base, sur au moins une de ses grandes faces, à l'aide d'un dépôt d'un métal d'apport ayant la composition du revêtement, par refusion sous laitier électroconducteur,
    - on soumet la brame composite à un processus de laminage sur un laminoir à bande, la brame étant initialement à une température de laminage à chaud, et le processus de laminage étant poursuivi jusqu'à l'obtention d'une bande de tôle ayant l'épaisseur désirée,
    - et on effectue, à la suite du laminage à chaud, un laminage à froid de la bande de tôle composite,

    caractérisé en ce qu'on dépose sur la brame en métal de base, avant son rechargement par le métal d'apport, une couche formant barrière au phénomène de diffusion des éléments de l'une quelconque des couches du métal de base et du métal d'apport dans l'autre.

2. Procédé selon la revendication 1, caractérisé en ce que la couche formant barrière à la diffusion est déposée par refusion sous flux ou sous laitier électroconducteur à partir d'un feuillard métallique.

3. Procédé selon les revendications 1 et 2, caractérisé en ce que le métal de la couche formant barrière est du nickel pur, un alliage de nickel, un acier inoxydable ou un fer de haute pureté ayant une teneur en carbone inférieure à 0,050 % en poids.

4. Procédé selon l'une quelconque des revendications 1 à 3, caractérisé en ce que le métal de base est un acier au carbone.

5. Procédé selon l'une quelconque des revendications 1 à 4, caractérisé en ce que l'épaisseur de la couche formant barrière à la diffusion est de 0,1 à 10 mm.

6. Procédé selon l'une quelconque des revendications précédentes, caractérisé en ce que l'épaisseur de chaque couche de rechargement est de 1 à 30 % de l'épaisseur de la brame en métal de base.

## Claims

1. A process for the production of a polymetallic composite sheet metal strip whose thickness is less than 6 mm and length at least 10 m and which comprises at least two metal layers of different compositions, one layer forming the base metal and at least one other layer forming a coating, wherein:
- a composite slab is produced by depositing on at least one of the major faces of a slab having the composition of the base metal a filler metal having the composition of the coating, by remelting under an electrically conductive slag,
- the composite slab is subjected to a rolling process on a strip rolling mill, the slab initially being at hot rolling temperature and the rolling process being continued until a sheet metal strip of the required thickness is obtained,
- and following hot rolling the composite sheet metal strip is cold rolled,

characterized in that before the filler metal is deposited, a layer is deposited on the base metal slab which forms a barrier against the diffusion of the elements of either the base metal layer of the filler metal layer into one another.

2. A process according to claim 1, characterized in that the layer forming a barrier against diffusion is deposited by remelting metal strip submerged or under electrically conductive slag.

3. A process according to claims 1 and 2, characterized in that the layer forming a barrier is pure nickel, a nickel alloy, a stainless steel or a high purity iron having a carbon content lower than 0.050% by weight.

4. A process according to any of claims 1 to 3, characterized in that the base metal is a carbon steel.

5. A process according to any of claims 1 to 4, characterized in that the thickness of the layer forming a barrier against diffusion is 0.1 to 10 mm.

6. A process according to any of the preceding claims, characterized in that the thickness of each filler layer is 1 to 30% of the thickness of the base metal slab.

**Patentansprüche**

1. Verfahren zur Herstellung eines polymetallischen Verbundblechbandes, dessen Dicke unter 6 mm und dessen Länge wenigstens gleich 10 m ist, mit wenigstens zwei Metallschichten verschiedener Zusammensetzungen, von denen die eine Schicht das Basismetall und wenigstens eine weitere Schicht einen Überzug bildet, wobei gemäß dem Verfahren
- eine Verbundbramme durch Erzeugen eines Auftrags auf einer die Zusammensetzung des Basismetalls aufweisenden Bramme auf wenigstens einer ihrer großen Flächen mittels Abscheidung eines die Zusammensetzung des Überzugs aufweisenden Auftragsmetalls durch Umschmelzen unter elektrisch leitender Schlacke erstellt wird,
- die Verbundbramme einem Walzvorgang auf einem Bandwalzwerk unterworfen wird, wobei die Bramme zunächst auf einer Warmwalztemperatur ist, und der Walzvorgang bis zum Erreichen eines Blechbandes der gewünschten Dicke fortgesetzt wird,
- nach dem Warmwalzen ein Kaltwalzen des Verbundblechbandes durchgeführt wird,

dadurch gekennzeichnet, daß auf der Bramme aus Basismetall, vor dem Auftrag des Auftragsmetalls auf dieser, eine Schicht abgeschieden wird, welche eine Barriere gegen eine Diffusion von Elementen aus irgendeiner der Schichten aus Basismetall und Auftragsmetall in die andere bildet.

2. Verfahren nach Anspruch 1, dadurch gekennzeichnet, daß die Diffusionsbarrierenschicht durch Umschmelzen unter Flußmittel oder unter elektrisch leitender Schlacke ausgehend von einer Metallfolie abgeschieden wird.

3. Verfahren nach den Ansprüchen 1 und 2, dadurch gekennzeichnet, daß das Metall der die Barriere bildenden Schicht Reinnickel, eine Nickellegierung, ein rostfreier Stahl oder ein hochreines Eisen mit einem Kohlenstoffgehalt unter 0,050 Gewichtsprozent ist.

4. Verfahren nach irgendeinem der Ansprüche 1 bis 3, dadurch gekennzeichnet, daß das Basismetall ein Kohlenstoffstahl ist.

5. Verfahren nach irgendeinem der Ansprüche 1 bis 4, dadurch gekennzeichnet, daß die Dicke der Diffusionsbarriereschicht 0,1 bis 10 mm beträgt.

6. Verfahren nach irgendeinem der vorstehenden Ansprüche, dadurch gekennzeichnet, daß die Dicke jeder Auftragsschicht 1 bis 30 % der Dicke der Bramme aus Basismetall ist.